# EUROPEAN PATENT APPLICATION

(11) **EP 1 333 226 A2**
(43) Date of publication of application: **06.08.2003**
(21) Application number: 03250642.0
(22) Date of filing: 31.01.2003
(51) Int. Cl.: F21S 8/00

(54) **Indicator light for telephone set**

(30) Priority: 01.02.2002 GB 0202314
(71) Applicant: Mitel Knowledge Corporation, Kanata, Ontario K2K 2W7 (CA)
(72) Inventor: Craig, Peter Mathieson, Kanata, Ontario K2L 2K7 (CA)
(74) Representative: Naismith, Robert Stewart

(57) **Abstract**

A low cost light guide (14) is provided for a message waiting light of a telephone. A circuit board (20) is supported inside the telephone housing and a light emitting diode (22) is mounted on the circuit board. A light guide (14) directs light from the light emitting diode to a diffuser (12) located on the outer face (13) of the telephone housing. The light guide is comprised of a flexible reflective material.

## Description

### Field Of The Invention

The present invention relates to indicator lights for telephones, and in particular, a low cost light guide for a message waiting light.

### Background Of The Invention

Message waiting indicators for telephone sets are typically constructed using a custom molded clear polycarbonate light guide. The light guide captures light from a light emitting diode (LED), that is located on the circuit board, and directs it via total internal reflection to a molded, red coloured, diffuser, which is located on the surface of the telephone set.

The diffuser must be located at a predetermined distance from the LED so that the light is able to diffuse adequately. If the board and the diffuser are too close together, the brightness of the light across the diffuser may be uneven, which creates hot spots.

The shape of the light guide is partially dependent on the limitations presented by the internal volume available between the LED and diffuser. In order to avoid loss of light between the LED and the diffuser, light guides must avoid tight bends and arrangements in which the angle of incidence of the light is too close to perpendicular to the internal surface of the guide.

If the board is not located in the vicinity of the diffuser, the light guide part must be made larger, which is more expensive. Alternately, a method of mounting the LED to the light guide and connecting to the board must be developed.

It is therefore an object of the present invention to provide a low cost device to obviate or mitigate the disadvantages that are associated with a conventional light guide.

### Summary Of The Invention

According to one aspect of the present invention there is provided an indicator light for a device, such as a telephone, comprising a light emitting diode disposed within a housing of the device, a diffuser located on an outer face of the housing, and a light guide coupled to the housing for directing light from the light emitting diode to the diffuser, wherein the light guide is comprised of a flexible reflective material.

According to another aspect of the present invention there is provided an indicator light for a device, such as a telephone, comprising: a light emitting diode disposed within a housing of the device; a diffuser located on an outer face of the housing; a light guide extending between the diffuser and the light emitting diode for directing light from the light emitting diode to the diffuser, the light guide having a first end and a second end, the first end being coupled to the diffuser and the second end being coupled to the light emitting diode; and wherein the light guide is comprised of a flexible reflective material.

It is an advantage of an aspect of the present invention that a low cost device is provided which adapts to different configurations of telephones and which minimizes light escaping before it reaches the diffuser.

### Brief Description Of The Drawings

An embodiment of the present invention will now be described more fully with reference to the accompanying drawings in which:
Figure 1 is a perspective view of a typical telephone set embodying the indicator light according to the present invention;
Figure 2 is an isometric view of a conical shaped light guide according to the preferred embodiment;
Figure 3 is an exploded perspective view of the indicator light incorporated in a telephone set according to the present invention; and
Figure 4 is a perspective view parts of a telephone set including the indicator light and the light guide of the present invention.

### Detailed Description Of The Preferred Embodiment

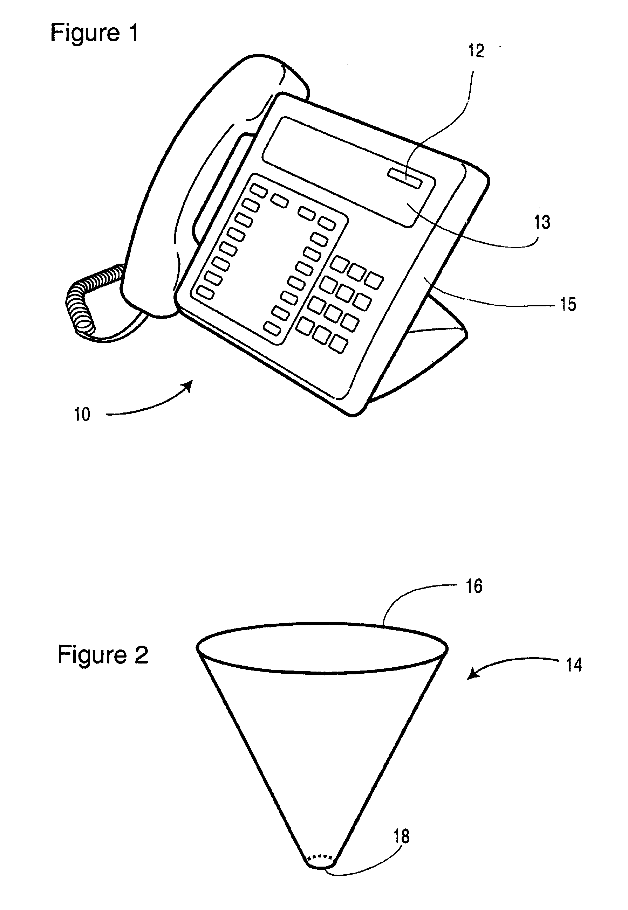

Referring to Figure 1, a telephone set 10 is shown. The telephone set 10 has a message waiting light 12 mounted on a front face 13 of a housing 15 thereof. The message waiting light is typically a molded, red coloured, diffuser. The telephone set 10 of Figure 1 is by way of example only. The present invention may be used with message waiting lights on all types of telephone sets.

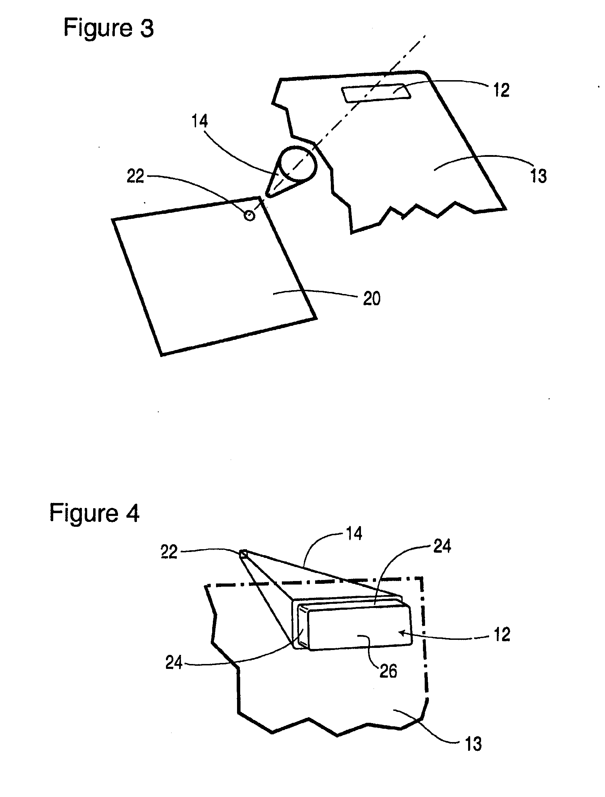

Figure 2 shows a light guide 14 having a conical shape. The light guide 14 has a base 16 and an apex 18 and is constructed from a flexible, reflective material, such as metalised mylar film. Other suitable materials having at least one reflective surface may also be used.

The exploded view of Figure 3 shows a light emitting diode (LED) 22 that is electrically coupled to a circuit board 20. LED 22 is inserted into the apex 18 of the light guide 14 so that essentially all of the light emitted from the LED 22 is contained inside the light guide 14 and reflects off the internal surfaces thereof. The base 16 of the light guide 14 is aligned with the diffuser 12 so that the light can only escape through the diffuser 12.

Referring to Figure 4, the light guide 14, diffuser 12 and LED 22 are shown in the assembled configuration. The diffuser 12 includes flanges 24 that project rearwardly from a diffusing surface 26 thereof. The flanges 24 typically project at a right angle from the diffusing surface 26, however, the flanges may be angled if necessary to achieve an optimum fit with the base 16 of the light guide 14. The flexible material of the light guide 14 is adhered to the flanges 24 in a manner that ensures that generally all of the light from the LED is directed to the diffuser 14. The flexible material may be adhered to the flanges 24 using glue or heat-sealed to the flanges 24. Alternatively, the light guide 14 may be held against the flanges 24 by an elastic band. It will be appreciated by a person skilled in the art that the light guide 14 may be coupled to the diffuser 12 in any manner that forms a suitable seal between the light guide 14 and the diffuser 12.

The apex 18 of the light guide 14 is sized to surround the LED 22. In the case where the LED 22 is located on the circuit board 20, the apex 18 of the light guide 14 is coupled to the board 20, using glue, for example. Alternatively, the light guide 14 may be clamped to the board 20 by another part of the telephone set 10.

In another embodiment, the LED 22 is not located on the board, but attached thereto by wires. If the LED 22 is a torpedo-type, the LED 22 must be clamped or clipped to a suitable component inside the telephone set 10. The light guide 14 can then be directly clamped, clipped, glued or heat sealed to the LED 22. If the LED 22 is a lighter weight type, the LED 22 may be directly sealed inside the light guide 14 by gluing or heat sealing the apex 18 of the light guide 14 shut so that it forms a bag around the LED 22, thus trapping the wires leading to the LED 22. An LED 22 assembly of this type is very light weight so there is no need to mount it to the telephone set 10, the rigidity of the wires and the bonding of the diffuser 12 is adequate to retain the LED 22. In the event that additional support is required, a glue patch may be added to the outer surface of the light guide 14 so that the light guide 14 may be bonded to the inside the housing of the telephone set 10. Alternatively, the outer surface of the light guide 14 may be provided with a flange or projection that can be coupled to the housing by gluing or heat sealing.

The result is that the light emitted from message waiting light 12 appears to be evenly distributed because the light that a user sees is a reflection off the surface of the light guide 14. The user does not see any hot spots.

The diffuser 12 of figures 1, 3 and 4 is shown as rectangular in shape. A person skilled in the art will appreciate that the diffuser may be curved rectangular, elliptical or any other suitable shape. In addition, the diffusing surface 26 is shown as being generally flush with the front face 13 of the telephone set 10, however, the diffusing surface 26 may project outwardly from the front face 13, if desired.

The light guide 14 is shown as being generally conical, however, the light guide 14 is not limited to this shape. Since it is reflected light that is emitted through the diffuser, alternate shapes are also effective. Because the light guide is flexible, it can be formed into different shapes in order to accommodate a wide range of telephone sets 10 having many different internal structures.

Although a preferred embodiment of the present invention has been described, those of skill in the art will appreciate that variations and modifications may be made. For example, although the preferred embodiment is directed to message waiting lights for telephone, the invention is equally applicable to other indicator lights such as "do not disturb", "on hold", etc. Moreover, although the preferred embodiment has been described for use with a telephone, the indicator light of the present invention may be used with any device having and enclosure or housing. All such modifications and embodiments are believed to be within the sphere and scope thereof as defined by the appended claims.

## Claims

1. An indicator light for a device, comprising a light emitting diode disposed within a housing of said device, a diffuser located on an outer face of the housing, and a light guide coupled to the housing for directing light from the light emitting diode to the diffuser, wherein said light guide is comprised of a flexible reflective material.

2. An indicator light as claimed in claim 1 wherein said light guide is conical shaped having an apex and a base.

3. An indicator light as claimed in claim 2 wherein said light emitting diode is inserted into said apex of the light guide and said diffuser is located at said base of said light guide.

4. For use with an indicator light having a light emitting diode disposed within a housing of a device, the improvement comprising a light guide fabricated from a flat piece of flexible reflective material molded to provide a conical shape, said flat piece of flexible reflective material being coupled inside said housing between said light emitting diode and a diffuser.

5. An indicator light for a device, comprising:
a light emitting diode disposed within a housing of said device;
a diffuser located on an outer face of the housing;
a light guide extending between the diffuser and the light emitting diode for directing light from the light emitting diode to the diffuser, said light guide having a first end and a second end, said first end being coupled to the diffuser; and
wherein said light guide is comprised of a flexible reflective material.

6. An indicator light as claimed in claim 5, wherein said light guide has a base located at said first end and an apex located at said second end, said base being larger that said apex.

7. An indicator light as claimed in claim 6, wherein said apex of said light guide surrounds the light emitting diode.

8. An indicator light as claimed in claim 7 wherein said light guide is conical shaped, tapering from said base to said apex.

9. An indicator light in accordance with any one of the foregoing claims wherein said device is a telephone.
